# EUROPÄISCHE PATENTSCHRIFT

(11) **EP 4 100 451 B1**
(45) Veröffentlichungstag und Bekanntmachung des Hinweises auf die Patenterteilung: **27.12.2023**
(21) Anmeldenummer: 21700687.3
(22) Anmeldetag: 11.01.2021
(51) Int. Cl.: C08G 18/10, C08G 18/30, C08G 18/48, C08G 18/76, C09J 175/08

(54) **POLYURETHAN-ZUSAMMENSETZUNG MIT GUTER HAFTUNG AUF KUNSTSTOFFEN**
POLYURETHANE COMPOSITION WITH GOOD ADHESION TO PLASTICS
COMPOSITION DE POLYURÉTHANE À BONNE ADHÉRENCE À DES MATIÈRES PLASTIQUES

(30) Priorität: 03.02.2020 EP 20155195
(43) Veröffentlichungstag der Anmeldung: 14.12.2022
(73) Patentinhaber: Sika Technology AG, 6340 Baar (CH)
(72) Erfinder: REIMANN, Sven, 8046 Zürich (CH); BALMER, Marc, 8103 Unterengstringen (CH); JENNI, Melanie, 8957 Spreitenbach (CH)
(74) Vertreter: Sika Patent Attorneys
(86) Internationale Anmeldenummer: PCT/EP2021/050373
(87) Internationale Veröffentlichungsnummer: WO 2021/156016

(56) Entgegenhaltungen:
- WO-A1-2018/234267

## Beschreibung

### Technisches Gebiet

Die Erfindung betrifft feuchtigkeitshärtende Polyurethan-Zusammensetzungen mit guter Haftung auf Kunststoff-Substraten und ihre Verwendung als elastische Klebstoffe.

### Stand der Technik

Polyurethan-Zusammensetzungen, welche durch Reaktion von Isocyanatgruppen mit Feuchtigkeit bzw. Wasser vernetzen und dabei zu Elastomeren aushärten, werden insbesondere als elastische Klebstoffe oder Dichtstoffe in der Bau- und Fertigungsindustrie eingesetzt, beispielsweise zur Verklebung von Bauteilen in der Montage oder zur Verfüllung von Fugen. Aufgrund ihrer Haftung und Elastizität können sie auf die Substrate einwirkende Kräfte, ausgelöst etwa durch Vibrationen oder Temperaturschwankungen, schonend dämpfen und überbrücken. Dabei unterstützen Weichmacher eine hohe Flexibilität, für das Ausbilden einer guten Haftung auf Kunststoff-Substraten sind sie jedoch nachteilig. Polyurethan-Zusammensetzungen enthalten als Bindemittel Isocyanatgruppen-haltige Polymere, welche durch Umsetzung von Polyolen mit monomeren Diisocyanaten hergestellt werden. Die so erhaltenen Polymere enthalten aufgrund von Kettenverlängerungsreaktionen einen Restgehalt an monomeren Diisocyanaten, typischerweise im Bereich von 1 bis 3 Gewichts-%. Monomere Diisocyanate sind potentiell gesundheitsschädlich. Zubereitungen enthaltend monomere Diisocyanate müssen insbesondere ab einer Konzentration von 0.1 Gewichts-% mit Gefahrensymbolen und Warnhinweisen auf dem Etikett und in den Datenblättern versehen sein und können in einigen Ländern nur unter Auflagen verkauft und eingesetzt werden. Es besteht deshalb ein Interesse an Polyurethan-Zusammensetzungen mit geringem Gehalt an Monomeren, insbesondere unter 0.1 Gewichts- %.

Ein attraktiver Weg zu Isocyanatgruppen-haltigen Polymeren mit geringem Gehalt an monomeren Diisocyanaten besteht darin, das monomere Diisocyanat bei der Polymerherstellung im Überschuss einzusetzen und anschliessend ein Grossteil des nicht umgesetzten monomeren Diisocyanats mittels Destillation zu entfernen. Besonders einfach durchzuführen ist dieser Weg mit niedermolekularen und somit flüchtigen monomeren Diisocyanaten, wie beispielsweise Hexandiisocyanat. Darauf basierende Polymere ergeben aber eine langsame Aushärtung und eine geringe mechanische Festigkeit in den Produkten. Polymere basierend auf 4,4'-Diphenylmethandiisocyanat (4,4'-MDI) ermöglichen eine schnelle, zuverlässige Aushärtung und eine hohe Festigkeit bei hoher Elastizität. Beim destillativen Entfernen des monomeren Diisocyanats sind sie aufgrund der geringen Flüchtigkeit von 4,4'-MDI aber wesentlich aufwändiger in der Herstellung.

Elastische Klebstoffe für das Verkleben von Kunststoff-Substraten werden in der Industrie zunehmend nachgefragt, beispielsweise für das Verkleben von Scheinwerfergehäusen oder Panormadächern an Fahrzeugen, organischem Glas bei Schiffen oder Zügen oder diversen Bauteilen an Caravans. Dabei soll der Klebstoff schnell und zuverlässig aushärten, bei hoher Festigkeit sehr elastisch sein und ohne aufwändige Vorbehandlung auf dem Kunststoff-Substrat eine hohe Haftkraft aufweisen, auch bei Belastung mit Hitze und Wasser. Klebstoffe basierend auf monomerarmen Polymeren zeigen aber insbesondere auch aufgrund der weitgehend fehlenden monomeren Diisocyanate Schwächen beim Haftungsaufbau zu Kunststoff-Substraten. EP3642252 offenbart feuchtigkeitshärtende Polyurethan-Zusammensetzung enthaltend ein Isocyanatgruppen-haltiges Polymer hergestellt aus Polyoxypropylen-Diol sowie -Triol, welche über latente Oxazolidinhärter ausgehärtet werden.

### Darstellung der Erfindung

Aufgabe der vorliegenden Erfindung ist es daher, eine feuchtigkeitshärtende Polyurethan-Zusammensetzung zur Verfügung zu stellen, welche schnell und zuverlässig aushärtet und bei hoher Dehnbarkeit und Festigkeit eine gute Haftung zu Kunststoff-Substraten aufbaut, auch bei geringem Gehalt an monomeren Diisocyanaten.

Diese Aufgabe wird mit einer Zusammensetzung wie in Anspruch 1 beschrieben gelöst. Sie enthält eine Kombination aus einem linearen, langkettigen Polymer **P1** und einem verzweigten Polymer **P2** in einem Gewichtsverhältnis im Bereich von 80/20 bis 95/5 und einen Gehalt an Weichmachern von höchstens 15 Gewichts-%. Überraschenderweise zeigt die Zusammensetzung im erfindungsgemässen Gewichtsverhältnis zwischen Polymer **P1** und **P2** eine ausgezeichnete Haftung auf Substraten, insbesondere Polycarbonat, auch nach Belastung mit Hitze und Wasser. Entsprechende Zusammensetzungen mit einem höheren Anteil an verzweigtem Polymer **P2** zeigen eine deutlich schlechtere Haftung, während bei noch geringerem Gehalt an verzweigtem Polymer **P2** die Zugfestigkeit der ausgehärteten Zusammensetzung plötzlich stark abnimmt und nicht genügt. Besonders überraschend an der erfindungsgemässen Zusammensetzung ist der Umstand, dass trotz geringem Gehalt an verzweigtem Polymer **P2** und auch bei äusserst niedrigem Diisocyanat-Monomergehalt Produkte mit hoher Festigkeit (Zugfestigkeit und Elastizitätsmodul) entstehen.

Die erfindungsgemässe Zusammensetzung ermöglicht elastische Klebstoffe mit guter Lagerstabilität unter Ausschluss von Feuchtigkeit, langer Offenzeit bei schneller Aushärtung und hoher Dehnung, überraschend hoher Festigkeit und überraschend guter Haftung auf Kunststoff-Substraten, auch bei attraktiver EHS-Einstufung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende Polyurethan-Zusammensetzung enthaltend
(i) mindestens ein lineares Isocyanatgruppen-haltiges Polymer **P1** mit einem NCO-Gehalt im Bereich von 0.3 bis 3.3 Gewichts-%, erhalten aus der Umsetzung von mindestens einem monomeren aromatischen Diisocyanat und einem Polyether-Diol mit einer OH-Zahl im Bereich von 5 bis 37 mg KOH/g,
(ii) mindestens ein verzweigtes Isocyanatgruppen-haltiges Polymer **P2** mit einem NCO-Gehalt im Bereich von 1 bis 10 Gewichts-%, erhalten aus der Umsetzung von mindestens einem monomeren aromatischen Diisocyanat und mindestens einem Polyether-Triol mit einer mittleren OH-Funktionalität von mindestens 2.2 und einer OH-Zahl im Bereich von 16 bis 380 mg KOH/g,
(iii) und einen Gehalt an Weichmachern von höchstens 15 Gewichts-% bezogen auf die gesamte Zusammensetzung,
dadurch gekennzeichnet, dass das Polymer **P1** und das Polymer **P2** in einem Gewichtsverhältnis im Bereich von 80/20 bis 95/5 vorliegen.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.

Als "aromatisch" wird eine Isocyanatgruppe bezeichnet, welche direkt an ein aromatisches C-Atom gebunden ist. Isocyanate mit ausschliesslich aromatischen Isocyanatgruppen werden entsprechend als "aromatische Isocyanate" bezeichnet. Als "aliphatisch" wird eine Isocyanatgruppe bezeichnet, welche direkt an ein aliphatisches oder cycloaliphatisches C-Atom gebunden ist. Isocyanate mit ausschliesslich aliphatischen Isocyanatgruppen werden entsprechend als "aliphatische Isocyanate" bezeichnet.

Als "monomeres aromatisches Diisocyanat" wird ein monomeres Diisocyanat mit aromatischen Isocyanatgruppen bezeichnet.

Als "NCO-Gehalt" wird der Gehalt an Isocyanatgruppen in Gewichts-% bezeichnet. Als "Weichmacher" wird eine bei Raumtemperatur flüssige Substanz bezeichnet, welche nach der Aushärtung der Zusammensetzung unverändert in dieser verbleibt und die ausgehärtete Zusammensetzung weicher macht.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt. Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten, bevorzugt bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Kunststoff" wird ein organisches Material auf der Basis von Makromolekülen bezeichnet, auch "Plastik" genannt.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt weist das Polymer **P1** einen NCO-Gehalt im Bereich von 0.5 bis 2.6 Gewichts-%, insbesondere 0.7 bis 2.0 Gewichts-%, besonders bevorzugt 0.9 bis 2.0 Gewichts-%, auf.

Als monomeres aromatisches Diisocyanat geeignet ist insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), 2,3,5,6-Tetramethyl-1,4-diisocyanatobenzol, Naphthalin-1,5-diisocyanat (NDI) oder 3,3'-Dimethyl-4,4'-diisocyanatodiphenyl (TODI).

Davon bevorzugt ist 4,4'-Diphenylmethandiisocyanat oder 2,4-Toluylendiisocyanat oder 1,4-Phenylendiisocyanat.

Besonders bevorzugt als monomeres aromatisches Diisocyanat ist 4,4'-Diphenylmethandiisocyanat (4,4'-MDI). Dabei ist das 4,4'-MDI von einer Qualität, welche nur geringe Anteile an 2,4'- und/oder 2,2'-Diphenylmethandiisocyanat enthält und bei Raumtemperatur fest ist. Es ermöglicht Polyurethan-Zusammensetzungen mit besonders schneller Aushärtung und besonders hoher Festigkeit bei hoher Dehnbarkeit und Elastizität.

Bevorzugt ist das 4,4'-MDI destilliert und weist eine Reinheit von mindestens 95 %, insbesondere mindestens 97.5 %, auf.

Ein kommerziell erhältliches 4,4'-Diphenylmethandiisocyanat dieser Qualität ist beispielsweise Desmodur^{®} 44 MC (von Covestro) oder Lupranat^{®} MRS oder ME (von BASF) oder Suprasec^{®} 1400 (von Huntsman).

Das Polyether-Diol enthält bevorzugt Repetiereinheiten ausgewählt aus der Gruppe bestehend aus 1,2-Ethylenoxy, 1,2-Propylenoxy, 1,3-Propylenoxy, 1,2-Butylenoxy und 1,4-Butylenoxy. Bevorzugt sind 1,2-Propylenoxy-Gruppen, gegebenenfalls mit einem gewissen Anteil an 1,2-Ethylenoxy-Gruppen.

Insbesondere enthält das Polyether-Diol 80 bis 100 Gewichts-% 1,2-Propylenoxy-Gruppen und 0 bis 20 Gewichts-% 1,2-Ethylenoxy-Gruppen.

Für den Fall, dass das Polyether-Diol 1,2-Ethylenoxy-Gruppen enthält, bilden die 1,2-Propylenoxy-Gruppen und die 1,2-Ethylenoxy-Gruppen bevorzugt jeweils homogene Blöcke und die Poly(1,2-ethylenoxy)-Blöcke befinden sich an den Kettenenden.

Das Polyether-Diol weist bevorzugt eine OH-Zahl im Bereich von 6 bis 33 mg KOH/g, insbesondere 9 bis 30 mg KOH/g, besonders bevorzugt 12 bis 30 mg KOH/g, auf.

Das Polyether-Diol weist bevorzugt ein mittleres Molekulargewicht Mₙ im Bereich von 3'000 bis 20'000 g/mol, besonders bevorzugt 3'500 bis 18'000 g/mol, insbesondere 4'000 bis 12'000 g/mol, am meisten bevorzugt 4'000 bis 9'000 g/mol, auf.

Das Polyether-Diol hat bevorzugt eine mittlere OH-Funktionalität von mindestens 1.8, insbesondere mindestens 1.9. Kommerzielle Polyether-Diole enthalten herstellungsbedingt einen gewissen Gehalt an Monolen, wodurch ihre mittlere OH-Funktionalität typischerweise leicht unterhalb von 2 liegt.

Das Polyether-Diol hat bevorzugt einen Ungesättigtheitsgrad von weniger als 0.02 mEq/g, insbesondere weniger als 0.01 mEq/g, gemessen nach ASTM D-2849-69. Polyether-Diole mit einem Ungesättigtheitsgrad von weniger als 0.01 mEq/g sind insbesondere hergestellt mit Hilfe von sogenannten Double Metal Cyanide Complex-Katalysatoren (DMC-Katalysatoren).

Das Polyether-Diol weist besonders bevorzugt eine OH-Zahl im Bereich von 6 bis 33 mg KOH/g, insbesondere 9 bis 30 mg KOH/g, besonders bevorzugt 12 bis 30 mg KOH/g, und eine mittlere OH-Funktionalität von mindestens 1.9 auf.

Geeignete Polyether-Diole sind kommerziell erhältlich, beispielsweise als Acclaim^{®} Polyol 4200, Acclaim^{®} Polyol 8200 N, Acclaim^{®} Polyol 12200 N oder Acclaim^{®} Polyol 18200 N (alle von Covestro), Lupranol^{®} 1005/1 (von BASF), Voranol^{®} P 4000 (von Dow) oder Preminol^{®} S 4013 F (von Asahi Glass).

Bevorzugt weist das Polymer **P1** ein mittleres Molekulargewicht Mₙ im Bereich von 4'000 bis 40'000 g/mol, auf, bestimmt mittels Gelpermeationschromatographie (GPC) gegen Polystyrol als Standard mit Tetrahydrofuran als mobile Phase und Brechungsindex-Detektor.

Besonders bevorzugt liegt das mittlere Molekulargwicht Mₙ im Bereich von 4'500 bis 30'000 g/mol, insbesondere 5'000 bis 25'000 g/mol, mehr bevorzugt 5'000 bis 15'000 g/mol.

Die Umsetzung des monomeren aromatischen Diisocyanats mit dem Polyether-Diol zur Herstellung des linearen Polymers **P1** wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Die Umsetzung erfolgt bevorzugt bei einem NCO/OH-Verhältnis im Bereich von 1.3/1 bis 20/1. Das nach der Umsetzung der OH-Gruppen im Reaktionsgemisch verbleibende monomere Diisocyanat kann entfernt werden, insbesondere mittels Destillation.

In einer Ausführungsform der Erfindung wird das monomere Diisocyanat nicht aus dem Polymer entfernt. In diesem Fall liegt das NCO/OH-Verhältnis bei der Umsetzung bevorzugt im Bereich von 1.3/1 bis 2.5/1. Ein solches Polymer **P1** enthält bevorzugt höchstens 3.5 Gewichts-% monomeres Diisocyanat.

Bevorzugt wird das Polymer **P1** so hergestellt, dass das NCO/OH-Verhältnis bei der Umsetzung bei mindestens 4/1 liegt und nachfolgend ein Grossteil des monomeren aromatischen Diisocyanats mittels eines geeigneten Trennverfahrens entfernt wird, so dass das erhaltene Isocyanatgruppen-haltige Polymer **P1** nach der Destillation höchstens 0.5 Gewichts-%, insbesondere höchstens 0.3 Gewichts-%, monomeres Diisocyanat enthält. Ein solches Polymer **P1** ermöglicht Polyurethan-Zusammensetzungen mit besonders attraktiver EHS-Einstufung.

Bevorzugt liegt das NCO/OH-Verhältnis im Bereich von 5/1 bis 15/1.

Als Trennverfahren zur Entfernung des aromatischen monomeren Diisocyanats bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere aromatische Diisocyanat in einem Kurzwegverdampfer bei einer Manteltemperatur im Bereich von 120 bis 200°C und einem Druck von 0.001 bis 0.5 mbar entfernt wird.

Im Fall des als monomeres aromatisches Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200 °C bei 0.001 bis 0.5 mbar gefahren und das entfernte Monomer bei einer Temperatur im Bereich von 40 bis 60°C kondensiert.

Bevorzugt erfolgt die Umsetzung des monomeren aromatischen Diisocyanats mit dem Polyether-Diol und das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung entfernte aromatische monomere Diisocyanat anschliessend wiederverwendet, d.h. erneut für die Herstellung von Isocyanatgruppen-haltigem Polymer eingesetzt.

Das lineare Polymer **P1** ist bei Raumtemperatur flüssig und weist eine vergleichsweise niedrige Viskosität auf. Bevorzugt hat es eine Viskosität bei 20°C von höchstens 60 Pa s, besonders bevorzugt höchstens 45 Pa s, insbesondere höchstens 30 Pa s. Dabei wird die Viskosität bestimmt mit einem Kegel-Platten-Viskosimeter bei einer Scherrate von 10 s⁻¹.

Bei der Umsetzung reagieren die OH-Gruppen des Polyether-Diols mit den Isocyanatgruppen des monomeren aromatischen Diisocyanats. Dabei kommt es auch zu sogenannten Kettenverlängerungsreaktionen, indem OH-Gruppen und/oder Isocyanatgruppen von Umsetzungsprodukten zwischen Diol und monomerem Diisocyanat reagieren. Je höher das NCO/OH-Verhältnis gewählt wird, desto weniger Kettenverlängerungsreaktionen finden statt, und desto niedriger ist die Polydispersität und somit auch die Viskosität des erhaltenen Polymers. Ein Mass für den Anteil an Kettenverlängerungsreaktionen ist das mittlere Molekulargewicht des Polymers bzw. die Breite und Verteilung der Peaks in der GPC-Analyse. Für den Fall, dass nicht umgesetztes monomeres Diisocyanat mittels Destillation aus dem Polymer entfernt wurde, ist der effektive NCO-Gehalt des Polymers im Verhältnis zum theoretischen NCO-Gehalt berechnet aus der Umsetzung jeder OH-Gruppe mit einem monomeren aromatischen Diisocyanat ein weiteres Mass für den Anteil an Kettenverlängerungsreaktionen.

Bevorzugt enthält ein mittels Destillation von Diisocyanat-Monomer befreites Polymer **P1** nur einen geringen Gehalt an kettenverlängerten Anteilen. Bevorzugt beträgt sein NCO-Gehalt mindestens 90%, insbesondere mindestens 95%, des theoretischen NCO-Gehalts, welcher aus der Addition von einem mol monomerem Diisocyanat pro mol OH-Gruppen des Polyether-Diols berechnet wird.

Bevorzugt weist das Polymer **P2** einen NCO-Gehalt im Bereich von 1.2 bis 7, insbesondere 1.4 bis 3.5 Gewichts-%, auf.

Als monomeres aromatisches Diisocyanat geeignet ist insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), 2,3,5,6-Tetramethyl-1,4-diisocyanatobenzol, Naphthalin-1,5-diisocyanat (NDI) oder 3,3'-Dimethyl-4,4'-diisocyanatodiphenyl (TODI).

Davon bevorzugt ist 4,4'-Diphenylmethandiisocyanat oder 2,4-Toluylendiisocyanat oder 1,4-Phenylendiisocyanat.

Besonders bevorzugt als monomeres aromatisches Diisocyanat ist 4,4'-Diphenylmethandiisocyanat (4,4'-MDI).

Bevorzugt ist das 4,4'-MDI destilliert und weist eine Reinheit von mindestens 95 %, insbesondere mindestens 97.5 %, auf.

Das Polyether-Triol enthält bevorzugt Repetiereinheiten ausgewählt aus der Gruppe bestehend aus 1,2-Ethylenoxy, 1,2-Propylenoxy, 1,3-Propylenoxy, 1,2-Butylenoxy und 1,4-Butylenoxy. Bevorzugt sind 1,2-Propylenoxy-Gruppen, gegebenenfalls mit einem gewissen Anteil an 1,2-Ethylenoxy-Gruppen.

Insbesondere weist das Polyether-Triol bezogen auf alle Repetiereinheiten 80 bis 100 Gewichts-% 1,2-Propylenoxy-Gruppen und 0 bis 20 Gewichts-% 1,2-Ethylenoxy-Gruppen auf.

Das Polyether-Triol weist bevorzugt eine OH-Zahl im Bereich von 21 bis 160 mg KOH/g, insbesondere 25 bis 60 mg KOH/g, auf.

Das Polyether-Triol hat bevorzugt eine mittleren OH-Funktionalität im Bereich von 2.3 bis 3. Kommerzielle Polyether-Triole enthalten herstellungsbedingt einen gewissen Gehalt an Monolen, wodurch deren mittlere OH-Funktionalität typischerweise etwas unterhalb von 3 liegt. Sie enthalten also typischerweise trifunktionelle und monofunktionelle Anteile.

Das Polyether-Triol weist bevorzugt ein mittleres Molekulargewicht Mₙ im Bereich von 450 bis 10'000 g/mol, besonders bevorzugt 1'000 bis 8'000 g/mol, insbesondere 2'800 bis 6'500 g/mol, auf.

Bevorzugt ist das Polyether-Triol mittels Trimethylolpropan oder insbesondere Glycerin gestartet.

Geeignete Polyether-Triole sind kommerziell erhältlich, beispielsweise als Desmophen^{®} 3061 BT, Desmophen^{®} 4042 BT, Desmophen^{®} 5031 BT, Desmophen^{®} 5034 BT oder Acclaim^{®} Polyol 6300 (alle von Covestro), Lupranol^{®} 2004/1 oder Lupranol^{®} 2095 (von BASF), Voranol^{®} CP 450, Voranol^{®} CP 755, Voranol^{®} CP Voranol^{®} CP 1050, Voranol^{®} CP 3055, Voranol^{®} CP 4755, Voranol^{®} 5815 oder Voranol^{®} CP 6001 (von Dow), Caradol^{®} ET34-08 oder Caradol^{®} ET28-03 (von Shell) oder Preminol^{®} 7001 K oder Preminol^{®} S 3011 (von Asahi Glass).

Bevorzugt weist das Polymer **P2** ein mittleres Molekulargewicht Mₙ im Bereich von 1'200 bis 40'000 g/mol, auf, bestimmt mittels Gelpermeationschromatographie (GPC) gegen Polystyrol als Standard mit Tetrahydrofuran als mobile Phase und Brechungsindex-Detektor.

Besonders bevorzugt liegt das mittlere Molekulargwicht Mₙ im Bereich von 2'000 bis 30'000 g/mol, insbesondere 4'000 bis 20'000 g/mol.

Die Umsetzung des monomeren aromatischen Diisocyanats mit dem Polyether-Triol zur Herstellung des verzweigten Polymers **P2** wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Die Umsetzung erfolgt bevorzugt bei einem NCO/OH-Verhältnis im Bereich von 1.7/1 bis 20/1. Das nach der Umsetzung der OH-Gruppen im Reaktionsgemisch verbleibende monomere Diisocyanat kann entfernt werden, insbesondere mittels Destillation.

In einer bevorzugten Ausführungsform der Erfindung wird das monomere Diisocyanat nicht aus dem Polymer entfernt. In diesem Fall liegt das NCO/OH-Verhältnis bei der Umsetzung bevorzugt im Bereich von 1.9/1 bis 2.5/1. Ein solches Polymer **P2** enthält bevorzugt höchstens 3.5 Gewichts-% monomeres Diisocyanat. Bei der Herstellung eines solchen Polymers **P2** kann zusammen mit dem Polyether-Triol ein gewisser Anteil an Polyether-Diol, insbesondere mit einer OH-Zahl im Bereich von 25 bis 115 mg KOH/g, bevorzugt 25 bis 60 mg KOH/g, mitverwendet werden. Das Verhältnis zwischen dem Polyether-Triol und dem Polyether-Diol wird dabei bevorzugt so gewählt, dass die mittlere NCO-Funktionalität des Polymers **P2** schliesslich mindestens 2.2 beträgt.

Besonders bevorzugt wird das Polymer **P2** so hergestellt, dass das NCO/OH-Verhältnis bei der Umsetzung bei mindestens 4/1, insbesondere im Bereich von 5/1 bis 10/1, liegt und nachfolgend ein Grossteil des monomeren aromatischen Diisocyanats mittels eines geeigneten Trennverfahrens entfernt wird, so dass das erhaltene Isocyanatgruppen-haltige Polymer **P2** nach der Destillation höchstens 0.5 Gewichts-%, insbesondere höchstens 0.3 Gewichts-%, monomeres Diisocyanat enthält. Ein solches Polymer **P2** ist besonders niedrigviskos und trägt dazu bei, dass die Polyurethan-Zusammensetzung eine attraktive EHS-Einstufung hat.

Bevorzugt ist das monomere aromatische Diisocyanat für die Herstellung der beiden Polymere **P1** und **P2** das gleiche monomere aromatische Diisocyanat.

Bevorzugt ist das monomere aromatische Diisocyanat für beide Polymere **P1** und **P2** 4,4'-MDI.

Die bevorzugten Polymere ermöglichen Polyurethan-Zusammensetzungen mit einer besonders vorteilhaften Kombination aus hoher Festigkeit und guter Haftung auf Kunststoff-Substraten.

Das Polymer **P1** und das Polymer **P2** liegen in der feuchtigkeitshärtenden Polyurethan-Zusammensetzung in einem Gewichtsverhältnis im Bereich von 80/20 bis 95/5 vor. In diesem Gewichtsverhältnis besteht eine überraschende Kombination aus guter Haftung auf Kunststoff-Substraten und hoher Festigkeit.

Bevorzugt liegt das Gewichtsverhältnis zwischen dem Polymer **P1** und **P2** im Bereich von 84/16 bis 93/7.

Für den Fall, dass das Polyether-Diol für die Herstellung des Polymers **P1** eine OH-Zahl im Bereich von 22 bis 37 mg KOH/g, insbesondere 25 bis 33 mg KOH/g, aufweist, liegt das Gewichtsverhältnis zwischen dem Polymer **P1** und **P2** bevorzugt im Bereich von 88/12 bis 93/7.

Für den Fall, dass das Polyether-Diol für die Herstellung des Polymers **P1** eine OH-Zahl im Bereich von 5 bis 21 mg KOH/g, insbesondere 6 bis 19 mg KOH/g, aufweist, liegt das Gewichtsverhältnis zwischen dem Polymer **P1** und **P2** bevorzugt im Bereich von 84/16 bis 91/9.

In den bevorzugten Gewichtsverhältnissen ist die Kombination aus guter Haftung und hoher Festigkeit besonders vorteilhaft.

Bevorzugt weist die feuchtigkeitshärtende Polyurethan-Zusammensetzung einen Gehalt an der Summe aus Polymer **P1** und Polymer **P2** bezogen auf die gesamte Zusammensetzung im Bereich von 20 bis 80 Gewichts-%, insbesondere 30 bis 70 Gewichts-%, besonders bevorzugt 40 bis 60 Gewichts-%, auf.

Zusätzlich zu den Polymeren **P1** und **P2** kann die feuchtigkeitshärtende Polyurethan-Zusammensetzung mindestens ein zusätzliches, nicht dem Polymer **P1** oder **P2** entsprechendes Isocyanatgruppen-haltiges Polymer enthalten.

Geeignet sind Polyether-basierte Polymere mit aliphatischen Isocyanatgruppen, sowie Polymere enthaltend Polyesterpolyole, Polycarbonatpolyole, Poly(meth)-acrylatpolyole, polyhydroxyfunktionelle Fette oder Öle, Polykohlenwasserstoffpolyole oder weitere Polyole.

Bevorzugt enthält die feuchtigkeitshärtende Polyurethan-Zusammensetzung insgesamt einen Gehalt an monomeren Diisocyanaten von weniger als 0.1 Gewichts-%.

Die feuchtigkeitshärtende Polyurethan-Zusammensetzung enthält gegebenenfalls Weichmacher, wobei höchstens 15 Gewichts-% Weichmacher bezogen auf die gesamte Zusammensetzung vorhanden sind. Weichmacher haben eher einen negativen Einfluss auf die Haftung auf Kunststoff-Substraten, weshalb sie nicht in zu hoher Menge eingesetzt werden. Bevorzugt enthält die feuchtigkeitshärtende Polyurethan-Zusammensetzung höchstens 10 Gewichts-%, insbesondere höchstens 5 Gewichts-%, Weichmacher.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1 ,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester, Weichmacher mit Polyetherstruktur, insbesondere Polypropylenoxid-monole, -diole oder -triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl. Bevorzugte Weichmacher sind Phthalate, hydrierte Phthalate, Adipate oder Weichmacher mit Polyetherstruktur.

Bevorzugt enthält die feuchtigkeitshärtende Polyurethan-Zusammensetzung mindestens einen weiteren Bestandteil ausgewählt aus der Gruppe bestehend aus Füllstoffen, oligomeren Diisocyanaten, blockierten Aminen, Katalysatoren und Stabilisatoren.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline oder industriell hergestellte Russe.

Geeignete oligomere Diisocyanate sind insbesondere HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei); HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); oder gemischte Isocyanurate auf Basis TDI/HDI wie Desmodur^{®} HL (von Covestro), wobei "HDI" für 1,6-Hexandiisocyanat, "IPDI" für Isophorondiisocyanat und "TDI" für 2,4-Toluylendiisocyanat oder Gemische davon mit 2,6-Toluylendiisocyanat steht.

Bevorzugt enthält die feuchtigkeitshärtende Polyurethan-Zusammensetzung nur einen geringen Gehalt an oligomeren Diisocyanaten, bevorzugt weniger als 5 Gewichts-%, besonders bevorzugt weniger als 3 Gewichts-%, insbesondere weniger als 1 Gewichts-%, bezogen auf die gesamte Zusammensetzung.

Ein geeignetes blockiertes Amin weist bevorzugt mindestens eine Aldiminogruppe oder Oxazolidinogruppe auf. Bei Kontakt mit Feuchtigkeit reagiert es unter Hydrolyse und Freisetzung der Aminogruppe mit vorhandenen Isocyanatgruppen und kann eine schnelle, blasenfreie Aushärtung, eine besonders nichtklebrige Oberfläche und/oder besonders gute mechanische Eigenschaften begünstigen.

Bevorzugte Oxazolidine sind Bis-Oxazolidine, insbesondere solche abgeleitet von Isobutyraldehyd, Benzaldehyd oder substituiertem Benzaldehyd, insbesondere Benzaldehyd, welches in para-Stellung mit einer gegebenenfalls verzweigten Alkylgruppe mit 10 bis 14 C-Atomen substituiert ist.

Bevorzugt sind Bis-Oxazolidine aus der Umsetzung von OH-funktionellen Mono-Oxazolidinen mit Diisocyanaten, insbesondere 1,6-Hexamethylendiisocyanat. Geegnete Mono-Oxazolidine werden insbesondere erhalten aus der Umsetzung von Diethanolamin und einem Aldehyd unter Freisetzung und Entfernung von Wasser.

Geeignete Aldimine sind insbesondere Di- oder Trialdimine aus der Umsetzung von handelsüblichen primären Di- oder Triaminen mit Aldehyden, welche nicht enolisierbar sind. Dies sind Aldehyde, welche in alpha-Stellung zum Kohlenstoffatom der Aldehydgruppe kein Wasserstoffatom aufweisen.

Besonders bevorzugte blockierte Amine sind ausgewählt aus der Gruppe bestehend aus N,N'-Bis(2,2-dimethyl-3-lauroyloxypropyliden)hexylen-1,6-diamin, N,N'-Bis(2,2-dimethyl-3-acetoxypropyliden)-3-aminomethyl-3,5,5-trimethylcyclohexylamin, N,N'-Bis(2,2-dimethyl-3-lauroyloxypropyliden)-3-aminomethyl-3,5,5-trimethylcyclohexylamin, N,N'-Bis(benzyliden)-3-aminomethyl-3,5,5-trimethylcyclohexylamin, N,N'-Bis(4-C₁₀₋₁₄-alkylbenzyliden)-3-aminomethyl-3,5,5-trimethyl-cyclohexylamin,N,N'-Bis(2,2-dimethyl-3-acetoxypropyliden)polyoxypropylendiam in mit einem mittleren Molekulargewicht Mₙ im Bereich von 450 bis 750 g/mol, N,N'-Bis(2,2-dimethyl-3-lauroyloxypropyliden)polyoxypropylendiamin mit einem mittleren Molekulargewicht Mₙ im Bereich von 750 bis 1'050 g/mol, N,N'-Bis(benzyliden)poly-oxypropylendiamin mit einem mittleren Molekulargewicht Mₙ im Bereich von 380 bis 680 g/mol, N,N'-Bis(4-C₁₀₋₁₄-alkylbenzyliden)polyoxypropylendiamin mit einem mittleren Molekulargewicht Mₙ im Bereich von 680 bis 1'100 g/mol N,N',N"-Tris(2,2-dimethyl-3-acetoxypropyliden)polyoxypropylentriamin mit einem mittleren Molekulargewicht Mₙ im Bereich von 730 bis 880 g/mol und N,N',N"-Tris(2,2-dimethyl-3-lauroyloxypropyliden)polyoxypropylentriamin mit einem mittleren Molekulargewicht Mₙ im Bereich von 1'150 bis1'300 g/mol.

Geeignete Katalysatoren sind Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Für den Fall, dass die feuchtigkeitshärtende Polyurethan-Zusammensetzung blockierte Amine enthält, sind geeignete Katalysatoren weiterhin Katalysatoren für die Hydrolyse der blockierten Aminogruppen, insbesondere organische Säuren, insbesondere aromatische Carbonsäuren wie Benzoesäure, 2-Nitrobenzoesäure oder Salicylsäure.

Geeignet sind insbesondere auch Kombinationen von verschiedenen Katalysatoren.

Geeignete Stabilisatoren sind insbesondere Stabilisatoren gegen Oxidation, Wärme, Licht oder UV-Strahlung. Bevorzugt enthält die Zusammensetzung mindestens einen UV-Stabilisator.

Die feuchtigkeitshärtende Polyurethan-Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylenglykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid oder organische Phosphorsäureester;
- Additive, insbesondere Netzmittel, Verlaufmittel, Entschäumer, Entlüfter oder Biozide;
oder weitere üblicherweise in feuchtigkeitshärtenden Polyurethan-Zusammensetzungen eingesetzte Substanzen.

Es kann sinnvoll sein, gewisse Substanzen vor dem Einmischen in die Zusammensetzung chemisch oder physikalisch zu trocknen.

Beim Vermischen von Isocyanatgruppen-haltigen Polymeren mit weiteren Bestandteilen der Zusammensetzung, insbesondere Füllstoffen, wird der Gehalt an monomeren Diisocyanaten durch Reaktion mit vorhandener Feuchtigkeit gegebenenfalls weiter reduziert.

Bevorzugt enthält die feuchtigkeitshärtende Polyurethan-Zusammensetzung
- 30 bis 70 Gewichts-% Isocyanatgruppen-haltige Polymere,
- 20 bis 60 Gewichts-% Füllstoffe,
- 0 bis 15 Gewichts-%, insbesondere 0 bis 5 Gewichts-%, Weichmacher,
und gegebenenfalls weitere Bestandteile, insbesondere blockierte Amine oder Katalysatoren.

Die feuchtigkeitshärtende Polyurethan-Zusammensetzung verfügt nach der Aushärtung über eine hohe Festigkeit bei hoher Dehnbarkeit.

Bevorzugt liegt die Zugfestigkeit, bestimmt wie in den Beispielen beschrieben, bei mindestens 1.5 MPa, besonders bevorzugt mindestens 2 MPa, insbesondere mindestens 3 MPa.

Bevorzugt liegt das Elastizitätsmodul im Bereich von 0.05 bis 5% Dehnung, bestimmt wie in den Beispielen beschrieben, im Bereich von 2.5 bis 20 MPa, insbesondere 3 bis 15 MPa.

Bevorzugt liegt die Bruchdehnung, bestimmt wie in den Beispielen beschrieben, bei mindestens 300%, insbesondere mindestens 500%.

Die feuchtigkeitshärtende Polyurethan-Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die feuchtigkeitshärtende Polyurethan-Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die feuchtigkeitshärtende Polyurethan-Zusammensetzung ist bevorzugt einkomponentig. Sie ist bei geeigneter Verpackung und Aufbewahrung lagerstabil, typischerweise während mehreren Monaten bis zu einem Jahr oder länger.

Bei der Applikation der feuchtigkeitshärtenden Polyurethan-Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator und/oder einen Härter enthält oder freisetzt, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die feuchtigkeitshärtende Polyurethan-Zusammensetzung ein blockiertes Amin enthält, reagieren die Isocyanatgruppen zudem mit den hydrolysierenden blockierten Aminogruppen. Die Gesamtheit dieser zur Aushärtung der Zusammensetzung führenden Reaktionen der Isocyanatgruppen wird auch als Vernetzung bezeichnet.

Die zur Aushärtung der feuchtigkeitshärtenden Polyurethan-Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die feuchtigkeitshärtende Polyurethan-Zusammensetzung wird bevorzugt bei Umgebungstemperatur appliziert, insbesondere im Bereich von etwa -10 bis 50°C, bevorzugt im Bereich von -5 bis 45°C, insbesondere 0 bis 40°C.

Die Aushärtung der feuchtigkeitshärtenden Polyurethan-Zusammensetzung erfolgt bevorzugt ebenfalls bei Umgebungstemperatur.

Die feuchtigkeitshärtende Polyurethan-Zusammensetzung verfügt über eine lange Verarbeitungszeit (Offenzeit) und eine schnelle Aushärtung.

Enthält die feuchtigkeitshärtende Polyurethan-Zusammensetzung ein blockiertes Amin, wird bei der Vernetzung der für die Blockierung der Aminogruppen verwendete Aldehyd freigesetzt. Für den Fall, dass dieser weitgehend unflüchtig ist, verbleibt er zum grössten Teil in der ausgehärteten Zusammensetzung und wirkt als Weichmacher.

Bevorzugt wird die feuchtigkeitshärtende Polyurethan-Zusammensetzung verwendet als elastischer Klebstoff oder elastischer Dichtstoff oder elastische Beschichtung.

Als Klebstoff und/oder Dichtstoff ist die feuchtigkeitshärtende Polyurethan-Zusammensetzung insbesondere geeignet für Klebe- und Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen. Als Dichtstoff ist die feuchtigkeitshärtende Polyurethan-Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen, insbesondere Bauteilen aus Kunststoff. oder von Bodenfugen im Tiefbau. Insbesondere für das Abdichten von Dilatationsfugen an Bauwerken ist ein Dichtstoff mit weichelastischen Eigenschaften und hoher Kälteflexibilität besonders geeignet.

Als Beschichtung ist die feuchtigkeitshärtende Polyurethan-Zusammensetzung insbesondere geeignet zum Schutz und/oder zum Abdichten von Bauwerken oder Teilen davon, insbesondere im Bereich von Materialien aus Kunststoff insbesondere für Balkone, Terrassen, Dächer, insbesondere Flachdächer oder schwach geneigte Dachfläche oder Dachgärten, oder im Innern von Gebäuden unter Fliesen oder Keramikplatten in Nasszellen oder Küchen, oder in Auffangwannen, Kanälen, Schächten, Silos, Tanks oder Abwasserbehandlungsanlagen.

Sie kann auch zu Reparaturzwecken als Abdichtung oder Beschichtung verwendet werden, beispielsweise von undichten Dachmembranen oder nicht mehr tauglichen Bodenbelägen oder als Reparaturmasse für hochreaktive Spritzabdichtungen.

Die feuchtigkeitshärtende Polyurethan-Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die feuchtigkeitshärtende Polyurethan-Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1 bis 2.5 mm, aufgetragen.

Bevorzugt wird die feuchtigkeitshärtende Polyurethan-Zusammensetzung verwendet zum Verkleben, Abdichten oder Beschichten von mindestens einem Kunststoff-Substrat.

Geeignete Kunststoff-Substrate sind insbesondere Hart- und Weich-PVC, Polycarbonat, Polystyrol, Polyester, Polyamid, PMMA, ABS, SAN, Epoxidharze, Phenolharze, PUR, POM, TPO, PE, PP, EPM, EPDM oder Blends von Polycarbonat und weiteren Kunstostoffen wie insbesondere ABS und/oder SAN, wobei diese Kunststoffe jeweils unbehandelt oder oberflächenbehandelt, beispielsweise mittels Plasma, Corona oder Flammen, vorliegen können, sowie faserverstärkte Kunststoffe wie insbesondere Kohlefaser-verstärkte Kunststoffe (CFK), Glasfaser-verstärkte Kunststoffe (GFK) oder Sheet Moulding Compounds (SMC).

Bevorzugt ist das Kunststoff-Substrat ausgewählt aus der Gruppe bestehend aus Hart-PVC, Weich-PVC, Polycarbonat, Polystyrol, Polyester, Polyamid, PMMA, ABS, SAN, Epoxidharze, Phenolharze, PUR, POM, TPO, PE, PP, EPM, EPDM und Blends von Polycarbonat mit weiteren Kunststoffen wie insbesondere ABS, und/oder SAN.

Davon bevorzugt sind Hart-PVC, Polycarbonat, Blends von Polycarbonat mit ABS und/oder SAN, PMMA oder ABS, insbesondere Polycarbonat oder Blends von Polycarbonat. Diese Kunststoffe sind besonders kritisch in Bezug auf gute Haftung ohne aufwändige Vorbehandlung und sollen besonders oft verklebt werden.

Geeignete weitere Substrate, welche mit der feuchtigkeitshärtenden Polyurethan-Zusammensetzung verklebt oder abgedichtet oder beschichtet werden können, sind insbesondere
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke;
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Isolierschäume, insbesondere aus EPS, XPS, PUR, PIR, Steinwolle, Glaswolle oder geschäumtem Glas (Foamglas).

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Die feuchtigkeitshärtende Polyurethan-Zusammensetzung wird bevorzugt eingesetzt in einem Verfahren zum Verkleben oder Abdichten, umfassend die Schritte
(i) Applizieren der beschriebenen feuchtigkeitshärtenden Polyurethan-Zusammensetzung
   - auf ein erstes Substrat und Kontaktieren der Zusammensetzung mit einem zweiten Substrat innerhalb der Offenzeit der Zusammensetzung, oder
   - auf ein erstes und auf ein zweites Substrat und Fügen der beiden Substrate innerhalb der Offenzeit der Zusammensetzung, oder
   - zwischen zwei Substrate,
(ii) Aushärten der Zusammensetzung durch Kontakt mit Feuchtigkeit.

Die feuchtigkeitshärtende Polyurethan-Zusammensetzung wird weiterhin bevorzugt eingesetzt in einem Verfahren zum Beschichten oder Abdichten, umfassend die Schritte
(i) Applizieren der beschriebenen feuchtigkeitshärtenden Polyurethan-Zusammensetzung auf ein Substrat,
(ii) Aushärten der Zusammensetzung durch Kontakt mit Feuchtigkeit.

In diesen Verfahren ist bevorzugt mindestens eines der Substrate ein Kunststoff-Substrat, wie vorgängig beschrieben.

Aus der Applikation und Aushärtung der feuchtigkeitshärtenden Polyurethan-Zusammensetzung wird ein Artikel erhalten, welcher mit der Zusammensetzung verklebt oder abgedichtet oder beschichtet ist. Dieser Artikel kann ein Bauwerk oder ein Teil davon sein, insbesondere ein Bauwerk des Hoch- oder Tiefbaus, ein Dach, ein Treppenhaus oder eine Fassade, oder er kann ein industrielles Gut oder ein Konsumgut sein, insbesondere ein Fenster, eine Lampe, eine Verkehrsampel, eine Haushaltmaschine oder ein Transportmittel wie insbesondere ein Automobil, ein Bus, ein Caravan, ein Lastkraftwagen, ein Schienenfahrzeug, ein Schiff, ein Flugzeug oder ein Helikopter, oder ein Anbauteil davon, beispielsweise ein Fenster aus organischem Glas, ein Panoramadach oder ein Lampengehäuse.

Ein weiterer Gegenstand der Erfindung ist die ausgehärtete Zusammensetzung, erhalten aus der feuchtigkeitshärtenden Polyurethan-Zusammensetzung nach deren Kontakt mit Feuchtigkeit.

Ein weiterer Gegenstand der Erfindung ist ein Haftverbund, umfassend mindestens ein Kunststoff-Substrat und die durch Kontakt mit Feuchtigkeit ausgehärtete Zusammensetzung, wie vorgängig beschrieben.

Die feuchtigkeitshärtende Polyurethan-Zusammensetzung zeichnet sich dadurch aus, dass sie über eine gute Lagerstabilität unter Ausschluss von Feuchtigkeit verfügt, bei langer Offenzeit schnell aushärtet und nach der Aushärtung ausgeprägt elastische Eigenschaften mit hoher Dehnung, überraschend hoher Festigkeit und überraschend guter Haftung auf Kunststoff-Substraten hat, auch wenn die Zusammensetzung so formuliert ist, dass sie einen sehr geringen Gehalt an monomeren Diisocyanaten und somit eine attraktive EHS-Einstufung aufweist.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich.

Die **Viskosität** wurde mit einem thermostatisierten Kegel-Platten-Viskosimeter Rheotec RC30 (Kegeldurchmesser 25 mm, Kegelwinkel 1°, Kegelspitze-PlattenAbstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivatisierung mittels N-Propyl-4-nitrobenzylamin bestimmt.

### verwendete Polyole:

| | |
|---|---|
| Acclaim^{®} 4200: | Polyoxypropylen-Diol, OH-Zahl 28 mg KOH/g (von Covestro) |
| Acclaim^{®} 8200N: | Polyoxypropylen-Diol, OH-Zahl 14 mg KOH/g (von Covestro) |
| Acclaim^{®} 12200: | Polyoxypropylen-Diol, OH-Zahl 10 mg KOH/g (von Covestro) |
| Desmophen^{®} 5031 BT: | Ethylenoxid-terminiertes Polyoxypropylen-Triol, OH-Zahl 28 mg KOH/g (von Covestro) |
| Voranol^{®} CP 4755: | Ethylenoxid-terminiertes Polyoxypropylen-Triol, OH-Zahl 35.0 mg KOH/g (von Dow) |

### verwendete monomere Diisocyanate:

| | |
|---|---|
| Desmodur^{®} 44 MC L: | 44,4'-Diphenylmethandiisocyanat mit einem NCO-Gehalt von 33.6 Gewichts-% (von Covestro) |

### Herstellung von Isocyanatgruppen-haltigen Polymeren:

### Polymer L1 (linear):

727 g (0.36 eq OH) Acclaim^{®} 4200 und 273 g (2.18 eq NCO) Desmodur^{®} 44 MC L wurden nach bekanntem Verfahren bei 80°C zu einem Polymer mit einem NCO-Gehalt von 7.4 Gewichts-%, einer Viskosität von 5.2 Pa s bei 20°C und einem Gehalt an monomerem 4,4'-Diphenylmethandiisocyanat von ca. 17 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 1.8 Gewichts-%, eine Viskosität von 13.3 Pa s bei 20°C und einen Gehalt an monomerem 4,4'-Diphenylmethandiisocyanat von 0.08 Gewichts-% auf.

### Polymer L2 (linear):

400 g (0.20 eq OH) Acclaim^{®} 4200 und 52 g (0.41 eq NCO) Desmodur^{®} 44 MC L wurden nach bekanntem Verfahren bei 80°C zu einem NCO-terminierten Polymer umgesetzt. Das so erhaltene lineare Polymer wies einen NCO-Gehalt von 1.8 Gewichts-%, eine Viskosität von 33 Pa s bei 20°C und einen Gehalt an monomerem 4,4'-Diphenylmethandiisocyanat von ca. 2.5 Gewichts-% auf

### Polymer L3 (linear):

757.7 g (0.19 eq OH) Acclaim^{®} 8200N und 242.3 g (1.9 eq NCO) Desmodur^{®} 44 MC L wurden nach bekanntem Verfahren bei 80°C zu einem Polymer mit einem NCO-Gehalt von 7.2 Gewichts-%, einer Viskosität von 6.8 Pa s bei 20°C und einem Gehalt an monomerem 4,4'-Diphenylmethandiisocyanat von ca. 20 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 1.0 Gewichts-%, eine Viskosität von 25.0 Pa s bei 20°C und einen Gehalt an monomerem 4,4'-Diphenylmethandiisocyanat von 0.06 Gewichts-% auf.

### Polymer L4 (linear):

812.0 g (0.15 eq OH) Acclaim^{®} 12200N und 188.0 g (1.5 eq NCO) Desmodur^{®} 44 MC L wurden nach bekanntem Verfahren bei 80°C zu einem Polymer mit einem NCO-Gehalt von 5.6 Gewichts-%, einer Viskosität von 13.9 Pa s bei 20°C und einem Gehalt an monomerem 4,4'-Diphenylmethandiisocyanat von ca. 14 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 0.7 Gewichts-%, eine Viskosität von 29.4 Pa s bei 20°C und einen Gehalt an monomerem 4,4'-Diphenylmethandiisocyanat von 0.04 Gewichts-% auf.

### Polymer C1 (verzweigt):

725.0 g (0.36 eq OH) Desmophen^{®} 5031 BT und 275 g (2.2 eq NCO) Desmodur^{®} 44 MC L wurden nach bekanntem Verfahren bei 80°C zu einem Polymer mit einem NCO-Gehalt von 7.6 Gewichts-%, einer Viskosität von 6.5 Pa s bei 20°C und einem Gehalt an monomerem 4,4'-Diphenylmethandiisocyanat von ca. 20 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polymer wies einen NCO-Gehalt von 1.7 Gewichts-%, eine Viskosität von 19 Pa s bei 20°C und einen Gehalt an monomerem 4,4'-Diphenylmethandiisocyanat von 0.04 Gewichts-% auf.

### Polymer C2 (verzweigt):

685 g Voranol^{®} CP 4755, 115 g Desmodur^{®} 44 MC L und 200 g Diisodecylphthalat wurden nach bekanntem Verfahren bei 80°C zu einem Polymer mit einem NCO-Gehalt von 2.0 Gewichts-%, einer Viskosität von 55 Pa s bei 20°C und einem Gehalt an monomerem 4,4'-Diphenylmethandiisocyanat von ca. 2.5 Gewichts-% umgesetzt.

### Feuchtigkeitshärtende Polyurethan-Zusammensetzungen:

### Zusammensetzungen Z1 bis Z15:

Für jede Zusammensetzung wurden die in den Tabellen 1 bis 4 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt. Die Zusammensetzungen wurden folgendermassen geprüft: Als Mass für die Offenzeit wurde die Hautbildungszeit (HBZ) bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Die **Shore A** Härte wurde bestimmt nach DIN 53505 an während 14 Tagen im Normklima ausgehärteten Prüfkörpern.

Zur Bestimmung der mechanischen Eigenschaften wurde die Zusammensetzung auf einem silikonbeschichteten Trennpapier zu einem Film von 2 mm Dicke aufgebracht, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul 5%** (bei 0.5-5% Dehnung) geprüft.

Die **Haftung** auf Kunststoff-Substraten wurde bestimmt, indem die Zusammensetzung in Form von vier parallelen Raupen von ca. 10 mm Breite, 5 mm Höhe und 15 mm Länge auf das jeweilige Substrat appliziert und während 7 Tagen im Normklima ausgehärtet wurde. Anschliessend wurde die Haftung der ausgehärteten Zusammensetzung ein erstes Mal getestet, indem die erste Raupe am schmalen Ende knapp über der Klebefläche eingeschnitten, das eingeschnittene Ende der Raupe mit einer Rundzange festgehalten und versucht wurde, die Raupe vom Substrat wegzuziehen. Dann wurde die Raupe erneut bis auf das Substrat eingeschnitten, wobei der freigeschnittene Teil mit der Rundzange aufgerollt und wiederum versucht wurde, die Raupe vom Substrat wegzuziehen. So wurde die ganze Raupe ziehend vom Substrat weggeschnitten. Anschliessend wurde anhand des Bruchbildes die Haftung beurteilt und in der Tabelle 1, 2 oder 3 mit "**7d NK**" angegeben. Ein Teil der Prüfkörper wurde anschliessend während 7 Tagen untergetaucht in deionisiertem Wasser gelagert, dann während 2 Stunden im Normklima aufbewahrt und dann die zweite Raupe mit der Rundzange ziehend vom Substrat weggeschnitten und anhand des Bruchbildes die Haftung beurteilt und in der Tabelle 1, 2 oder 3 mit "**7d H₂O**" angegeben. Dann wurden die Prüfkörper während 24 Stunden in einem Umluftofen bei 80 °C gelagert, gefolgt von 2 Stunden im Normklima, und dann die dritte Raupe wie beschrieben auf Haftung geprüft, anhand des Bruchbildes die Haftung beurteilt und in der Tabelle 1, 2 oder 3 mit "**1d 80°C**" angegeben. Schliesslich wurden die Prüfkörper während 7 Tagen bei 70°C und 100% relativer Feuchtigkeit aufbewahrt, gefolgt von 2 Stunden im Normklima, und die vierte Raupe wie beschrieben auf Haftung geprüft, anhand des Bruchbildes die Haftung beurteilt und in der Tabelle 1, 2 oder 3 mit "**7d 70°C/100%rF"** angegeben.

Als Kunststoff-Substrate wurden die folgenden Kunststoffplatten (300x200 x2mm) eingesetzt:
**PMMA:** Plexiglas^{®} XT 0A000 (von Evonik Röhm)
PC: Makrolon^{®} GP clear 099 (unbeschichtetes Polycarbonat, von Covestro)
ABS: Metzoplast ABS/G (von Metzeler Plastics GmbH)
PVC: KömaDur^{®} ES (von Kömmerling Kunststoffe)

Die Haftung wurde nach folgender Skala beurteilt:
100 steht für mehr als 95% Kohäsionsbruch und bedeutet eine sehr gute Haftung.
70 bis 90 steht für 70 bis 90% Kohäsionsbruch und bedeutet eine gute Haftung.
   5 steht für 5% Kohäsionsbruch und bedeutet eine ungenügende Haftung.
   0 steht für 0% Kohäsionsbruch (100% Adhäsionsbruch) und bedeutet eine schlechte Haftung.

Die Resultate sind in den Tabellen 1 bis 4 angegeben.

Vergleichsbeispiele sind mit (Ref.) gekennzeichnet.

**Tabelle 1: Zusammensetzung (in Gewichtsteilen) und Eigenschaften von Z1 bis Z7.**

| **Zusammensetzung** | **Z1 (Ref.)** | **Z2** | **Z3** | **Z4** | **Z5** | **Z6** | **Z7 (Ref.)** |
|---|---|---|---|---|---|---|---|
| **Polymer L1** | 41.4 | 47.4 | 48.7 | 49.4 | 50.4 | 51.4 | 53.4 |
| **Polymer C1** | 14.0 | 8.0 | 6.7 | 6.0 | 5.0 | 4.0 | 2.0 |
| pTSI¹ | 0.4 | 0.4 | 0.4 | 0.4 | 0.4 | 0.4 | 0.4 |
| Russ | 10.0 | 10.0 | 10.0 | 10.0 | 10.0 | 10.0 | 10.0 |
| Kreide² | 32.0 | 32.0 | 32.0 | 32.0 | 32.0 | 32.0 | 32.0 |
| Kieselsäure³ | 2.0 | 2.0 | 2.0 | 2.0 | 2.0 | 2.0 | 2.0 |
| DMDEE⁴ | 0.2 | 0.2 | 0.2 | 0.2 | 0.2 | 0.2 | 0.2 |
| *Polymer-Verhältnis⁵* | *75*/*25* | *86*/*14* | *88*/*12* | *89*/*11* | *91*/*9* | *93*/*7* | *96*/*4* |
| Shore A | 44 | 48 | 48 | 47 | 38 | 41 | 36 |
| Zugfestigkeit [MPa] | 6.3 | 4.9 | 6.5 | 6.3 | 5.5 | 2.3 | 0.9 |
| Bruchdehnung [%] | 900 | 1230 | 1060 | 1130 | 1100 | 1000 | 890 |
| E-Modul 5% [MPa] | 4.3 | 4.4 | 4.9 | 5.0 | 4.9 | 4.5 | 3.4 |

| Haftung **PC** | | | | | | | |
|---|---|---|---|---|---|---|---|
| 7d NK | 100 | 100 | 100 | 100 | 100 | 100 | 100 |
| 7d H₂O | 100 | 100 | 100 | 100 | 100 | 100 | 100 |
| 1d 80°C | 100 | 100 | 100 | 100 | 100 | 100 | 100 |
| 7d 70°C/100%rF | 0 | 5 | 5 | 85 | 90 | 100 | 100 |

| Haftung **PMMA** | | | | | | | |
|---|---|---|---|---|---|---|---|
| 7d NK | 0 | 70 | 90 | 100 | 100 | 100 | 100 |

| | | | | | | | |
|---|---|---|---|---|---|---|---|
| ¹ p-Toluolsulfonylisocyanat ² Omyacarb^{®} 5 GU (von Omya) ³ Aerosil^{®} R 972 (von Evonik) ⁴ 2,2'-Dimorpholinodiethylether ⁵ Gewichtsverhältnis zwischen linearem und verzweigtem Polymer | | | | | | | |

**Tabelle 2: Zusammensetzung (in Gewichtsteilen) und Eigenschaften von Z4 und Z8 bis Z10.**

| **Zusammensetzung** | **Z4** | **Z8** | **Z9** | **Z10** |
|---|---|---|---|---|
| **Polymer L1** | 49.4 | - | 49.4 | - |
| **Polymer L2** | - | 49.4 | - | 49.4 |
| **Polymer C1** | 6.0 | 6.0 | - | - |
| **Polymer C2** | - | - | 7.5 | 7.5 |
| pTSI¹ | 0.4 | 0.4 | 0.4 | 0.4 |
| Russ | 10.0 | 10.0 | 10.0 | 10.0 |
| Kreide² | 32.0 | 32.0 | 30.5 | 30.5 |
| Kieselsäure³ | 2.0 | 2.0 | 2.0 | 2.0 |
| DMDEE⁴ | 0.2 | 0.2 | 0.2 | 0.2 |
| *Polymer-Verhältnis⁵* | *89*/*11* | *89*/*11* | *89*/*11* | *89*/*11* |
| HBZ [min.] | 70 | 70 | 70 | 65 |
| Shore A | 47 | 53 | 48 | 61 |
| Zugfestigkeit [MPa] | 6.3 | 6.8 | 7.2 | 6.1 |
| Bruchdehnung [%] | 1130 | 862 | 1135 | 745 |
| E-Modul 5% [MPa] | 5.0 | 8.4 | 4.9 | 8.8 |

| Haftung **PC** | | | | |
|---|---|---|---|---|
| 7d NK | 100 | 100 | 100 | 100 |
| 7d H₂O | 100 | 100 | 100 | 100 |
| 1d 80°C | 100 | 100 | 100 | 100 |
| 7d 70°C/100%rF | 85 | 90 | 90 | 80 |

| Haftung **PMMA** | | | | |
|---|---|---|---|---|
| 7d NK | 100 | 100 | 100 | 100 |

| | | | | |
|---|---|---|---|---|
| ¹ p-Toluolsulfonylisocyanat ² Omyacarb^{®} 5 GU (von Omya) ³ Aerosil^{®} R 972 (von Evonik) ⁴ 2,2'-Dimorpholinodiethylether ⁵ Gewichtsverhältnis zwischen linearem und verzweigtem Polymer (Polymer **C2** enthält 10 Gew.-% Weichmacher) | | | | |

**Tabelle 3: Zusammensetzung (in Gewichtsteilen) und Eigenschaften von Z11 bis Z14.**

| **Zusammensetzung** | **Z11 (Ref.)** | **Z12** | **Z13** | **Z14 (Ref.)** |
|---|---|---|---|---|
| **Polymer L3** | 41.4 | 47.4 | 49.4 | 53.4 |
| **Polymer C1** | 14.0 | 8.0 | 6.0 | 2.0 |
| pTSI¹ | 0.4 | 0.4 | 0.4 | 0.4 |
| Russ | 10.0 | 10.0 | 10.0 | 10.0 |
| Kreide² | 32.0 | 32.0 | 32.0 | 32.0 |
| Kieselsäure³ | 2.0 | 2.0 | 2.0 | 2.0 |
| DMDEE⁴ | 0.2 | 0.2 | 0.2 | 0.2 |
| *Polymer-Verhältnis⁵* | *75*/*25* | *86*/*14* | *89*/*11* | *96*/*4* |
| Shore A | 49 | 45 | 45 | 28 |
| Zugfestigkeit [MPa] | 6.7 | 3.8 | 2.4 | 0.4 |
| Bruchdehnung [%] | 1040 | 1170 | 1135 | 53 |
| E-Modul 5% [MPa] | 3.9 | 3.8 | 3.8 | 2.4 |

| Haftung **PC** | | | | |
|---|---|---|---|---|
| 7d NK | 100 | 100 | 100 | 100 |
| 7d H₂O | 100 | 100 | 100 | 0 |
| 1d 80°C | 100 | 100 | 100 | 100 |
| 7d 70°C/100%rF | 0 | 100 | 100 | 0 |

| | | | | |
|---|---|---|---|---|
| ¹ p-Toluolsulfonylisocyanat ² Omyacarb^{®} 5 GU (von Omya) ³ Aerosil^{®} R 972 (von Evonik) ⁴ 2,2'-Dimorpholinodiethylether ⁵ Gewichtsverhältnis zwischen linearem und verzweigtem Polymer | | | | |

**Tabelle 4: Zusammensetzung (in Gewichtsteilen) und Eigenschaften von Z15 bis Z18.**

| **Zusammensetzung** | **Z15 (Ref.)** | **Z16** | **Z17** | **Z18 (Ref.)** |
|---|---|---|---|---|
| **Polymer L4** | 41.4 | 47.4 | 49.4 | 53.4 |
| **Polymer C1** | 14.0 | 8.0 | 6.0 | 2.0 |
| pTSI¹ | 0.4 | 0.4 | 0.4 | 0.4 |
| Russ | 10.0 | 10.0 | 10.0 | 10.0 |
| Kreide² | 32.0 | 32.0 | 32.0 | 32.0 |
| Kieselsäure³ | 2.0 | 2.0 | 2.0 | 2.0 |
| DMDEE⁴ | 0.2 | 0.2 | 0.2 | 0.2 |
| *Polymer-Verhältnis⁵* | *75*/*25* | *86*/*14* | *89*/*11* | *96*/*4* |
| Shore A | 49 | 44 | 40 | 33 |
| Zugfestigkeit [MPa] | 5.8 | 4.7 | 1.8 | 0.5 |
| Bruchdehnung [%] | 950 | 1200 | 971 | 425 |
| E-Modul 5% [MPa] | 3.8 | 3.3 | 3.3 | 2.9 |

| Haftung **PC** | | | | |
|---|---|---|---|---|
| 7d NK | 100 | 100 | 100 | 100 |
| 7d H₂O | 100 | 100 | 100 | 100 |
| 1d 80°C | 100 | 100 | 100 | 100 |
| 7d 70°C/100%rF | 0 | 100 | 100 | 100 |

| Haftung **ABS** | | | | |
|---|---|---|---|---|
| 7d NK | 0 | 100 | 100 | 100 |
| 7d H₂O | 0 | 100 | 100 | 100 |
| 1d 80°C | 0 | 100 | 100 | 100 |
| 7d 70°C/100%rF | 0 | 100 | 100 | 100 |

| Haftung **PVC** | | | | |
|---|---|---|---|---|
| 7d NK | 0 | 100 | 100 | 90 |
| 7d H₂O | 0 | 100 | 100 | 100 |
| d 80°C | 0 | 100 | 100 | 100 |
| 7d 70°C/100%rF | 100 | 100 | 100 | 100 |

| | | | | |
|---|---|---|---|---|
| ¹ p-Toluolsulfonylisocyanat ² Omyacarb^{®} 5 GU (von Omya) ³ Aerosil^{®} R 972 (von Evonik) ⁴ 2,2'-Dimorpholinodiethylether ⁵ Gewichtsverhältnis zwischen linearem und verzweigtem Polymer | | | | |

Aus den Tabellen 1 bis 4 ist ersichtlich, dass die erfindungsgemässen Zusammensetzungen, bei welchen das lineare und das verzweigte Polymer im erfindungsgemässen Verhältnis vorliegt, gute mechanische Eigenschaften und eine verbesserte Haftung auf den Kunststoff-Substraten gegenüber der jeweiligen Referenz-Zusammensetzung mit zu niedrigem Gehalt an linearem Polymer (Z1 bzw. **Z11** bzw. Z15) aufweisen, während die Referenz-Zusammensetzungen mit zu hohem Gehalt an linearem Polymer (Z7 bzw. **Z14** bzw. Z18) zwar eine gute Haftung zeigen, aber eine so niedrige Zugfestigkeit aufweisen, dass sie nicht geeignet sind als Klebstoffe für elastische Verklebungen.

## Patentansprüche

1. Feuchtigkeitshärtende Polyurethan-Zusammensetzung enthaltend
(i) mindestens ein lineares Isocyanatgruppen-haltiges Polymer **P1** mit einem NCO-Gehalt im Bereich von 0.3 bis 3.3 Gewichts-%, erhalten aus der Umsetzung von mindestens einem monomeren aromatischen Diisocyanat und einem Polyether-Diol mit einer OH-Zahl im Bereich von 5 bis 37 mg KOH/g,
(ii) mindestens ein verzweigtes Isocyanatgruppen-haltiges Polymer **P2** mit einem NCO-Gehalt im Bereich von 1 bis 10 Gewichts-%, erhalten aus der Umsetzung von mindestens einem monomeren aromatischen Diisocyanat und mindestens einem Polyether-Triol mit einer mittleren OH-Funktionalität im Bereich von mindestens 2.2 und einer OH-Zahl im Bereich von 16 bis 380 mg KOH/g,
(iii) und einen Gehalt an Weichmachern von höchstens 15 Gewichts-% bezogen auf die gesamte Zusammensetzung,
**dadurch gekennzeichnet, dass** das Polymer **P1** und das Polymer **P2** in einem Gewichtsverhältnis im Bereich von 80/20 bis 95/5 vorliegen.

2. Feuchtigkeitshärtende Polyurethan-Zusammensetzung gemäss Anspruch 1, **dadurch gekennzeichnet, dass** das Polymer **P1** einen NCO-Gehalt im Bereich von 0.5 bis 2.6 Gewichts-% aufweist.

3. Feuchtigkeitshärtende Polyurethan-Zusammensetzung gemäss einem der Ansprüche 1 bis 2, **dadurch gekennzeichnet, dass** das Polymer **P1** so hergestellt wird, dass das NCO/OH-Verhältnis bei der Umsetzung bei mindestens 4/1 liegt und nachfolgend ein Grossteil des monomeren aromatischen Diisocyanats mittels eines geeigneten Trennverfahrens entfernt wird, so dass das erhaltene Isocyanatgruppen-haltige Polymer **P1** nach der Destillation höchstens 0.5 Gewichts-% monomeres Diisocyanat enthält.

4. Feuchtigkeitshärtende Polyurethan-Zusammensetzung gemäss einem der Ansprüche 1 bis 3, **dadurch gekennzeichnet, dass** das Polyether-Diol eine OH-Zahl im Bereich von 6 bis 33 mg KOH/g und eine mittlere OH-Funktionalität von mindestens 1.9 aufweist.

5. Feuchtigkeitshärtende Polyurethan-Zusammensetzung gemäss einem der Ansprüche 1 bis 4, **dadurch gekennzeichnet, dass** das monomere aromatische Diisocyanat für beide Polymere **P1** und **P2** 4,4'-Diphenylmethandiisocyanat ist.

6. Feuchtigkeitshärtende Polyurethan-Zusammensetzung gemäss einem der Ansprüche 1 bis 5, **dadurch gekennzeichnet, dass** der Gehalt der Summe aus Polymer **P1** und Polymer **P2** bezogen auf die gesamte Zusammensetzung im Bereich von 20 bis 80 Gewichts-% liegt.

7. Feuchtigkeitshärtende Polyurethan-Zusammensetzung gemäss einem der Ansprüche 1 bis 6, **dadurch gekennzeichnet, dass** der Gehalt an monomeren Diisocyanaten in der Zusammensetzung insgesamt weniger als 0.1 Gewichts-% beträgt.

8. Feuchtigkeitshärtende Polyurethan-Zusammensetzung gemäss einem der Ansprüche 1 bis 7, **dadurch gekennzeichnet, dass** mindestens ein weiterer Bestandteil ausgewählt aus der Gruppe bestehend aus Füllstoffen, oligomeren Diisocyanaten, blockierten Aminen, Katalysatoren und Stabilisatoren enthalten ist.

9. Verwendung der feuchtigkeitshärtenden Polyurethan-Zusammensetzung gemäss einem der Ansprüche 1 bis 8 als elastischer Klebstoff oder elastischer Dichtstoff oder elastische Beschichtung.

10. Verwendung gemäss Anspruch 9, **dadurch gekennzeichnet, dass** mindestens ein Kunststoff-Substrat verklebt, abgedichtet oder beschichtet wird.

11. Verwendung gemäss Anspruch 10, **dadurch gekennzeichnet, dass** das Kunststoff-Substrat ausgewählt ist aus der Gruppe bestehend aus Hart-PVC, Weich-PVC, Polycarbonat, Polystyrol, Polyester, Polyamid, PMMA, ABS, SAN, Epoxidharze, Phenolharze, PUR, POM, TPO, PE, PP, EPM, EPDM und Blends von Polycarbonat mit weiteren Kunststoffen wie insbesondere ABS und/oder SAN.

12. Verfahren zum Verkleben oder Abdichten, umfassend die Schritte
(i) Applizieren der feuchtigkeitshärtenden Polyurethan-Zusammensetzung gemäss einem der Ansprüche 1 bis 8
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
(ii) Aushärten der Zusammensetzung durch Kontakt mit Feuchtigkeit.

13. Verfahren zum Beschichten oder Abdichten, umfassend die Schritte
(i) Applizieren der feuchtigkeitshärtenden Polyurethan-Zusammensetzung gemäss einem der Ansprüche 1 bis 8 auf ein Substrat,
(ii) Aushärten der Zusammensetzung durch Kontakt mit Feuchtigkeit.

14. Ausgehärtete Zusammensetzung, erhalten aus der feuchtigkeitshärtenden Polyurethan-Zusammensetzung gemäss einem der Ansprüche 1 bis 8 nach deren Kontakt mit Feuchtigkeit.

15. Haftverbund umfassend mindestens ein Kunststoff-Substrat und die durch Kontakt mit Feuchtigkeit ausgehärtete Polyurethan-Zusammensetzung gemäss einem der Ansprüche 1 bis 8.

## Claims

1. Moisture-curing polyurethane composition comprising
(i) at least one linear polymer P1 containing isocyanate groups and having an NCO content in the range from 0.3% to 3.3% by weight, obtained from the reaction of at least one monomeric aromatic diisocyanate and a polyether diol having an OH number in the range from 5 to 37 mg KOH/g,
(ii) at least one branched polymer P2 containing isocyanate groups and having an NCO content in the range from 1% to 10% by weight, obtained from the reaction of at least one monomeric aromatic diisocyanate and at least one polyether triol having an average OH functionality in the region of at least 2.2 and an OH number in the range from 16 to 380 mg KOH/g,
(iii) and a content of plasticizers of not more than 15% by weight, based on the overall composition, **characterized in that** polymer P1 and polymer P2 are present in a weight ratio in the range from 80/20 to 95/5.

2. Moisture-curing polyurethane composition according to Claim 1, **characterized in that** polymer P1 has an NCO content in the range from 0.5% to 2.6% by weight.

3. Moisture-curing polyurethane composition according to either of Claims 1 and 2, **characterized in that** polymer P1 is prepared in such a way that the NCO/OH ratio in the reaction is at least 4/1, and a majority of the monomeric aromatic diisocyanate is subsequently removed by means of a suitable separation process, such that the resultant polymer P1 containing isocyanate groups, after distillation, contains not more than 0.5% by weight of monomeric diisocyanate.

4. Moisture-curing polyurethane composition according to any of Claims 1 to 3, **characterized in that** the polyether diol has an OH number in the range from 6 to 33 mg KOH/g and an average OH functionality of at least 1.9.

5. Moisture-curing polyurethane composition according to any of Claims 1 to 4, **characterized in that** the monomeric aromatic diisocyanate for both polymers P1 and P2 is diphenylmethane 4,4'-diisocyanate.

6. Moisture-curing polyurethane composition according to any of Claims 1 to 5, **characterized in that** the content of the sum total of polymer P1 and polymer P2, based on the overall composition, is in the range from 20% to 80% by weight.

7. Moisture-curing polyurethane composition according to any of Claims 1 to 6, **characterized in that** the content of monomeric diisocyanates in the composition is less than 0.1% by weight in total.

8. Moisture-curing polyurethane composition according to any of Claims 1 to 7, **characterized in that** at least one further constituent selected from the group consisting of fillers, oligomeric diisocyanates, blocked amines, catalysts and stabilizers is present.

9. Use of the moisture-curing polyurethane composition according to any of Claims 1 to 8 as elastic adhesive or elastic sealant or elastic coating.

10. Use according to Claim 9, **characterized in that** at least one plastic substrate is bonded, sealed or coated.

11. Use according to Claim 10, **characterized in that** the plastic substrate is selected from the group consisting of rigid PVC, flexible PVC, polycarbonate, polystyrene, polyester, polyamide, PMMA, ABS, SAN, epoxy resins, phenolic resins, PUR, POM, TPO, PE, PP, EPM, EPDM, and blends of polycarbonate with further plastics such as, in particular, ABS and/or SAN.

12. Method of bonding or sealing, comprising the steps of
(i) applying the moisture-curing polyurethane composition according to any of Claims 1 to 8
- to a first substrate and contacting the composition with a second substrate within the open time of the composition, or
- to a first and to a second substrate and joining the two substrates within the open time of the composition, or
- between two substrates,
(ii) curing the composition by contact with moisture.

13. Method of coating or sealing, comprising the steps of
(i) applying the moisture-curing polyurethane composition according to any of Claims 1 to 8 to a substrate,
(ii) curing the composition by contact with moisture.

14. Cured composition obtained from the moisture-curing polyurethane composition according to any of Claims 1 to 8 after contact thereof with moisture.

15. Bonded composite comprising at least one plastic substrate and the polyurethane composition according to any of Claims 1 to 8 that has been cured by contact with moisture.

## Revendications

1. Composition de polyuréthane durcissant à l'humidité, contenant
(i) au moins un polymère linéaire **P1** contenant des groupes isocyanate, ayant une teneur en NCO dans la plage de 0,3 à 3,3 % en poids, obtenu par la réaction d'au moins un diisocyanate aromatique monomère et d'un polyéther-diol ayant un indice d'OH dans la plage de 5 à 37 mg KOH/g,
(ii) au moins un polymère ramifié **P2** contenant des groupes isocyanate, ayant une teneur en NCO dans la plage de 1 à 10 % en poids, obtenu par la réaction d'au moins un diisocyanate aromatique monomère et d'au moins un polyéther-triol ayant une fonctionnalité OH moyenne dans la plage d'au moins 2,2 et un indice d'OH dans la plage de 16 à 380 mg KOH/g,
(iii) et ayant une teneur en plastifiants d'au plus 15 % en poids par rapport à la composition totale,
**caractérisée en ce que** le polymère **P1** et le polymère **P2** sont présents selon un rapport en poids dans la plage de 80/20 à 95/5.

2. Composition de polyuréthane durcissant à l'humidité selon la revendication 1, **caractérisée en ce que** le polymère **P1** présente une teneur en NCO dans la plage de 0,5 à 2,6 % en poids.

3. Composition de polyuréthane durcissant à l'humidité selon l'une des revendications 1 à 2, **caractérisée en ce que** le polymère **P1** est fabriqué par le fait que le rapport NCO/OH, lors de la réaction, est d'au moins 4/1, puis qu'une grande partie du diisocyanate aromatique monomère est éliminée par un procédé approprié de séparation, de sorte que le polymère **P1** contenant des groupes isocyanate obtenu contient après la distillation au plus 0,5 % en poids du diisocyanate monomère.

4. Composition de polyuréthane durcissant à l'humidité selon l'une des revendications 1 à 3, **caractérisée en ce que** le polyéther-diol présente un indice d'OH dans la plage de 6 à 33 mg KOH/g et une fonctionnalité OH moyenne d'au moins 1,9.

5. Composition de polyuréthane durcissant à l'humidité selon l'une des revendications 1 à 4, **caractérisée en ce que** le diisocyanate aromatique monomère est, pour les deux polymères **P1** et **P2,** le diisocyanate de 4,4'-diphénylméthane.

6. Composition de polyuréthane durcissant à l'humidité selon l'une des revendications 1 à 5, **caractérisée en ce que** la teneur en la somme du polymère **P1** et **P2,** rapportée à la composition totale, est comprise dans la plage de 20 à 80 % en poids.

7. Composition de polyuréthane durcissant à l'humidité selon l'une des revendications 1 à 6, **caractérisée en ce que** la teneur de la composition en diisocyanates monomères est en tout inférieure à 0,1 % en poids.

8. Composition de polyuréthane durcissant à l'humidité selon l'une des revendications 1 à 7, **caractérisée en ce qu'**elle contient au moins un autre constituant choisi dans le groupe consistant en les charges, les diisocyanates oligomères, les amines bloquées, les catalyseurs et les stabilisants.

9. Utilisation de la composition de polyuréthane durcissant à l'humidité selon l'une des revendications 1 à 8 en tant qu'adhésif élastique ou matériau d'étanchéité élastique ou revêtement élastique.

10. Utilisation selon la revendication 9, **caractérisée en ce qu'**au moins un substrat plastique est collé, étanchéifié ou revêtu.

11. Utilisation selon la revendication 10, **caractérisée en ce que** le substrat plastique est choisi dans le groupe consistant en le PVC rigide, le PVC souple, le polycarbonate, le polystyrène, le polyester, le polyamide, le PMMA, l'ABS, le SAN, les résines époxydes, les résines phénoliques, le PUR, le POM, le TPO, le PE, le PP, l'EPM, l'EPDM et les mélanges de polycarbonate et d'autres plastiques tels en particulier que l'ABS et/ou le SAN.

12. Procédé de collage ou d'étanchéification, comprenant les étapes suivantes :
(i) application de la composition de polyuréthane durcissant à l'humidité selon l'une des revendications 1 à 8
- sur un premier substrat et mise en contact de la composition avec un second substrat à l'intérieur du temps ouvert de la composition, ou
- sur un premier et sur un second substrat, et assemblage des deux substrats à l'intérieur du temps ouvert de la composition, ou
- entre deux substrats,
(ii) durcissement de la composition par contact avec de l'humidité.

13. Procédé de revêtement ou d'étanchéification, comprenant les étapes suivantes
(i) application de la composition de polyuréthane durcissant à l'humidité selon l'une des revendications 1 à 8 sur un substrat,
(ii) durcissement de la composition par contact avec de l'humidité.

14. Composition durcie, obtenue à partir de la composition de polyuréthane durcissant à l'humidité selon l'une des revendications 1 à 8 après son contact avec de l'humidité.

15. Assemblage collé comprenant au moins un substrat plastique et la composition de polyuréthane durcie par contact avec de l'humidité selon l'une des revendications 1 à 8.
